# EUROPÄISCHE PATENTANMELDUNG

(11) **EP 1 854 681 A2**
(43) Veröffentlichungstag der Anmeldung: **14.11.2007**
(21) Anmeldenummer: 07009143.4
(22) Anmeldetag: 07.05.2007
(51) Int. Cl.: B60R 21/34, B60H 1/00

(54) **Luftkanal für ein Kraftfahrzeug**

(30) Priorität: 08.05.2006 DE 102006021386
(71) Anmelder: TRW Automotive Electronics & Components GmbH & Co. KG, 67677 Enkenbach/Alsenborn (DE)
(72) Erfinder: Schenkenberger, Jürgen, 66957 Hochstellerhof (DE); Oszlanyi, Tobias, 50170 Kerpen (DE); Elsner, Markus, 67657 Kaiserslautern (DE)
(74) Vertreter: Strass, Jürgen

(57) **Zusammenfassung**

Ein Luftkanal (10) für ein Kraftfahrzeug umfaßt eine einen Kanal (16) umgebende Wandung. Die Wandung weist ein erstes Wandungsteil (12) aus einem härteren Material und ein zweites Wandungsteil (14) aus einem weicheren Material auf. Ein Verfahren zur Herstellung eines solchen Luftkanals (10) ist dadurch gekennzeichnet, daß eine Dichtung (18, 20) gespritzt wird, die zur Befestigung der beiden Wandungsteile (12, 14) aneinander beiträgt.

## Beschreibung

Die Erfindung betrifft einen Luftkanal für ein Kraftfahrzeug. Die Erfindung betrifft ferner ein Verfahren zur Herstellung eines solchen Luftkanals.

Im Zusammenhang mit neuen Bestimmungen zum Schutz von Fußgängern bei Verkehrsunfällen besteht die Forderung, daß die Motorhaube eines Kraftfahrzeugs in einem bestimmten Maß deformierbar sein muß. Um diese Forderung erfüllen zu können, muß gewährleistet sein, daß die Deformation nicht durch die im Motorraum vorhandenen Bauteile behindert wird. Dies gilt insbesondere für einen unmittelbar unter der Motorhaube angeordneten Luftkanal.

Aufgabe der Erfindung ist es, einen Luftkanal zu schaffen, der diesen Anforderungen genügt.

Gelöst wird die Aufgabe gemäß der Erfindung durch einen Luftkanal für ein Kraftfahrzeug mit einer einen Kanal umgebenden Wandung, der dadurch gekennzeichnet ist, daß die Wandung ein erstes Wandungsteil aus einem härteren Material und ein zweites Wandungsteil aus einem weicheren Material aufweist. Das harte erste Wandungsteil gibt dem erfindungsgemäßen Luftkanal die für die Funktion und die Handhabung notwendige Stabilität, während sich das weiche zweite Wandungsteil gegebenenfalls ausreichend stark verformen kann, wenn die Motorhaube des Kraftfahrzeugs infolge eines Zusammenstoßes mit einem Fußgänger eingedrückt wird.

Bevorzugt ist - bezogen auf die Einbaulage im Kraftfahrzeug - das erste Wandungsteil ein der Motorhaube des Kraftfahrzeugs abgewandtes unteres Wandungsteil und das zweite Wandungsteil ein der Motorhaube zugewandtes oberes Wandungsteil. Das stabilere untere Wandungsteil kann bei dieser Anordnung fest im Motorraum angebracht werden.

Beispielsweise kann das erste Wandungsteil aus PP (Polypropylen) und das zweite Wandungsteil aus PE-LD (Polyethylen geringer Dichte) gebildet sein.

Die beiden Wandungsteile sind vorteilhaft durch eine Dichtung relativ zueinander abgedichtet, die gleichzeitig zur Befestigung der beiden Wandungsteile aneinander beiträgt. Diese Doppelfunktion der Dichtung macht ansonsten erforderliche zusätzliche Befestigungsmaßnahmen weitgehend überflüssig.

Gemäß einer ersten bevorzugten Ausführungsform ist die Dichtung zwischen seitlichen Flanschen der Wandungsteile angeordnet. Vorzugsweise weist die Dichtung in diesem Fall Vorsprünge auf, die in entsprechende Ausnehmungen wenigstens eines Flansches eingreifen.

Gemäß einer zweiten bevorzugten Ausführungsform umgreift die Dichtung seitliche Flansche der Wandungsteile.

Die Erfindung schafft auch ein Verfahren zur Herstellung eines erfindungsgemäßen Luftkanals, das dadurch gekennzeichnet ist, daß eine Dichtung eingespritzt wird, die zur Befestigung der beiden Wandungsteile aneinander beiträgt. Somit können alle wesentlichen Bestandteile des Luftkanals, nämlich die Wandungsteile und die Dichtung, in einem Ein- oder Mehrkomponenten-Spritzgußverfahren hergestellt und zusammengefügt werden, ohne daß weitere Verfahrensschritte zur Verbindung der beiden Wandungsteile notwendig sind.

Im Falle der ersten bevorzugten Ausführungsform wird die Dichtung zwischen seitlichen Flanschen der Wandungsteile eingespritzt.

Im Falle der zweiten bevorzugten Ausführungsform wird die Dichtung um seitliche Flansche der Wandungsteile gespritzt.

Weitere Merkmale und Vorteile der Erfindung ergeben sich aus der nachfolgenden Beschreibung und aus den beigefügten Zeichnungen, auf die Bezug genommen wird. In den Zeichnungen zeigen jeweils in perspektivischer Ansicht:
- Figur 1 eine erste Ausführungsform des erfindungsgemäßen Luftkanals in vereinfachter Darstellung;
- Figur 2 die wesentlichen Komponenten des Luftkanals aus Figur 1;
- Figur 3 eine vergrößerte Darstellung des Details X aus Figur 2; und
- Figur 4 eine zweite Ausführungsform des erfindungsgemäßen Luftkanals.

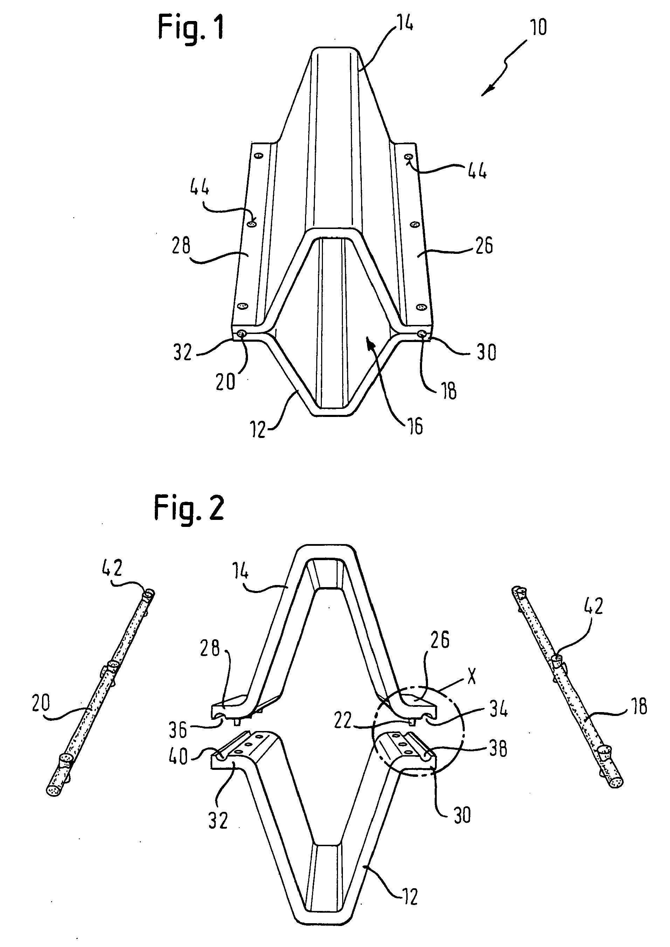

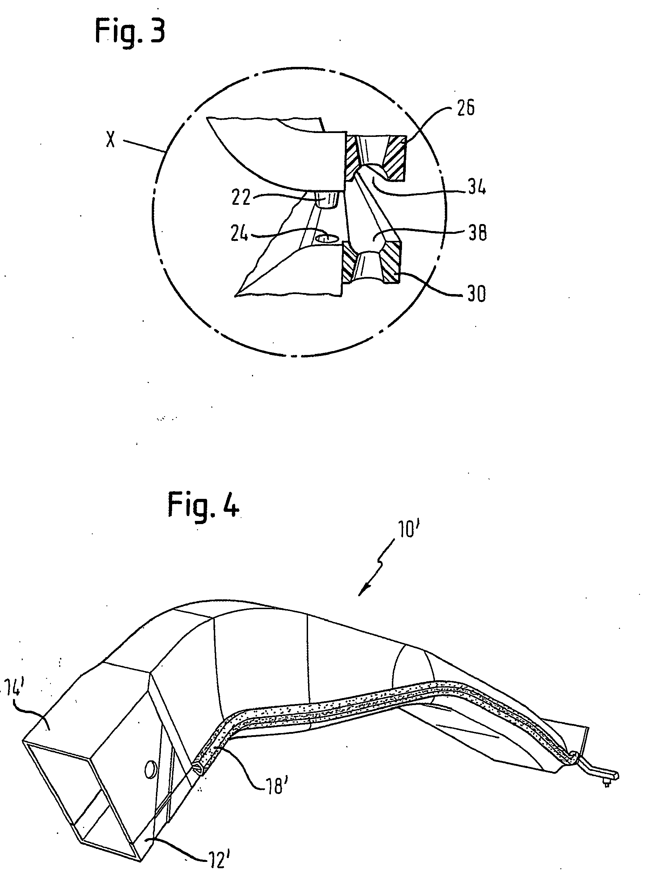

Die in den Figuren 1 und 2 sehr vereinfacht dargestellte erste Ausführungsform 10 des erfindungsgemäßen Luftkanals besteht im wesentlichen aus einem unteren Wandungsteil 12 und einem oberen Wandungsteil 14, die zusammen eine einen Kanal 16 umgebende Wandung bilden, sowie einer Dichtung in Form von zwei Dichtungsleisten 18, 20. Das untere Wandungsteil 12 ist aus einem vergleichsweise harten Kunststoff, z.B. PP, das obere Wandungsteil 14 aus einem vergleichsweise weichen Kunststoff, z.B. PE-LD, gebildet. Wie in der Detailansicht der Figur 3 zu erkennen ist, weist eines der Wandungsteile Rastnasen 22 auf, die in passende Rastaufnahmen 24 des anderen Wandungsteils eingreifen. Die dadurch gebildeten Rastverbindungen erleichtern die Handhabung bei der weiter unten noch genauer beschriebenen Fertigung des Luftkanals 10.

Wie aus Figur 2 hervorgeht, weisen beide Wandungsteile 12, 14 seitliche Flansche 26, 28 bzw. 30, 32 mit Nuten 34, 36 bzw. 38, 40 auf, in die die Dichtungsteile 18, 20 eingefügt sind. Die Dichtungsteile 18, 20 erstrecken sich im wesentlichen über die gesamte Länge des Luftkanals 10 und weisen mehrere kegelförmige Vorsprünge 42 auf, die in entsprechende Ausnehmungen 44 der Flansche 26, 28, 30, 32 eingreifen. Die Vorsprünge 42 dienen insbesondere zur relativen Fixierung der beiden Wandungsteile 12, 14.

Die Herstellung des Luftkanals 10 erfolgt in einem Mehrkomponenten-Spritzgußverfahren. Zunächst werden die beiden Wandungsteile 12, 14 in entsprechenden Formwerkzeugkavitäten aus unterschiedlich hartem Kunststoff gespritzt. Die beiden Wandungsteile 12, 14 werden dann miteinander verrastet und als lose verbundene Einheit in eine weitere Kavität eingesetzt. Nun werden die Dichtungsleisten 18, 20 in die Nuten 34, 36, 38, 40 eingespritzt, wobei auch Dichtmaterial in die Ausnehmungen 44 der Flansche 26, 28, 30, 32 gepreßt wird. Auf diese Weise entstehen die als Fixierhilfe dienenden kegelförmigen Vorsprünge 42.

Die gespritzte Dichtung hat nicht nur eine Dichtfunktion, sondern sorgt auch für die endgültige Befestigung der beiden Wandungsteile 12, 14 aneinander.

Die Herstellung des Luftkanals 10 kann alternativ in einem Einkomponentenverfahren erfolgen. Der Ablauf des Einkomponentenverfahrens unterscheidet sich nicht wesentlich vom Mehrkomponentenverfahren.

Der fertige Luftkanal 10 wird so in den Motorraum eines Kraftfahrzeugs eingebaut, daß das härtere untere Wandungsteil 12 der Motorhaube des Kraftfahrzeugs abgewandt und das weichere obere Wandungsteil 14 der Motorhaube zugewandt ist. Die Befestigung des Luftkanals 10 im Motorraum erfolgt über das stabilere, untere Wandungsteil 12.

In Figur 4 ist eine weitere Ausführungsform 10' des erfindungsgemäßen Luftkanals mit einem unteren Wandungsteil 12' und einem oberen Wandungsteil 14' gezeigt. Auch bei dieser Ausführungsform ist das untere Wandungsteil 12' aus einem vergleichsweise harten Kunststoff und das obere Wandungsteil 14' aus einem vergleichsweise weichen Kunststoff gebildet.

Der wesentliche Unterschied zur ersten Ausführungsform besteht darin, daß die Dichtungsleisten, von denen in Figur 4 nur eine Leiste 18' zu sehen ist, nicht zwischen den Flanschen der Wandungsteile 12', 14' angeordnet sind, sondern die Flansche außen umgreifen. Außerdem ist die vertikale Höhe des weicheren oberen Wandungsteils 14' deutlich größer als die des harten unteren Wandungsteils 12'.

Die Herstellung erfolgt nach dem gleichen Prinzip wie bei der ersten Ausführungsform.

## Patentansprüche

1. Luftkanal für ein Kraftfahrzeug, mit einer einen Kanal (16) umgebenden Wandung, **dadurch gekennzeichnet, daß** die Wandung ein erstes Wandungsteil (12; 12') aus einem härteren Material und ein zweites Wandungsteil (14; 14') aus einem weicheren Material aufweist.

2. Luftkanal nach Anspruch 1, **dadurch gekennzeichnet, daß** - bezogen auf die Einbaulage im Kraftfahrzeug - das erste Wandungsteil (12; 12') ein der Motorhaube des Kraftfahrzeugs abgewandtes unteres Wandungsteil (12; 12') und das zweite Wandungsteil ein der Motorhaube zugewandtes oberes Wandungsteil (14; 14') ist.

3. Luftkanal nach Anspruch 1 oder 2, **dadurch gekennzeichnet, daß** das erste Wandungsteil (12; 12') aus PP gebildet ist.

4. Luftkanal nach einem der Ansprüche 1 bis 3, **dadurch gekennzeichnet, daß** das zweite Wandungsteil (14; 14') aus PE-LD gebildet ist.

5. Luftkanal nach einem der vorhergehenden Ansprüche, **dadurch gekennzeichnet, daß** die beiden Wandungsteile (12, 14; 12', 14') durch eine Dichtung (18, 20; 18') relativ zueinander abgedichtet sind, die gleichzeitig zur Befestigung der beiden Wandungsteile (12, 14; 12', 14') aneinander beiträgt.

6. Luftkanal nach Anspruch 5, **dadurch gekennzeichnet, daß** die Dichtung (18, 20) zwischen seitlichen Flanschen (26, 28, 30, 32) der Wandungsteile (12, 14) angeordnet ist.

7. Luftkanal nach Anspruch 6, **dadurch gekennzeichnet, daß** die Dichtung (18, 20) Vorsprünge (42) aufweist, die in entsprechende Ausnehmungen (44) wenigstens eines Flansches (26, 28, 30, 32) eingreifen.

8. Luftkanal nach Anspruch 7, **dadurch gekennzeichnet, daß** die Vorsprünge (42) im wesentlichen kegelförmig sind.

9. Luftkanal nach Anspruch 5, **dadurch gekennzeichnet, daß** die Dichtung (18') seitliche Flansche der Wandungsteile (12', 14') umgreift.

10. Luftkanal nach einem der vorhergehenden Ansprüche, **dadurch gekennzeichnet, daß** die beiden Wandungsteile (12, 14; 12', 14') miteinander verrastet sind.

11. Verfahren zur Herstellung eines Luftkanals gemäß einem der vorhergehenden Ansprüche, **dadurch gekennzeichnet, daß** eine Dichtung gespritzt wird, die zur Befestigung der beiden Wandungsteile aneinander beiträgt.

12. Verfahren nach Anspruch 11, **dadurch gekennzeichnet, daß** die Dichtung zwischen seitlichen Flanschen der Wandungsteile eingespritzt wird.

13. Verfahren nach Anspruch 11, **dadurch gekennzeichnet, daß** die Dichtung um seitliche Flansche der Wandungsteile gespritzt wird.

14. Verfahren nach einem der Ansprüche 11 bis 13, **dadurch gekennzeichnet, daß** die beiden Wandungsteile aus unterschiedlich harten Werkstoffen gespritzt werden.
